# EUROPÄISCHE PATENTSCHRIFT

(11) **EP 3 209 492 B1**
(45) Veröffentlichungstag und Bekanntmachung des Hinweises auf die Patenterteilung: **19.04.2023**
(21) Anmeldenummer: 15778280.6
(22) Anmeldetag: 08.10.2015
(51) Int. Cl.: B30B 1/26, H02K 7/10, B30B 1/14, H02K 7/08, H02K 16/00

(54) **PRESSENANTRIEBSVORRICHTUNG FÜR EINE PRESSE UND PRESSE MIT PRESSENANTRIEBSVORRICHTUNG**
PRESS DRIVE DEVICE FOR A PRESS, AND PRESS COMPRISING A PRESS DRIVE DEVICE
DISPOSITIF D'ENTRAÎNEMENT DE PRESSE ET PRESSE ÉQUIPÉE D'UN DISPOSITIF D'ENTRAÎNEMENT DE PRESSE

(30) Priorität: 20.10.2014 DE 102014115238
(43) Veröffentlichungstag der Anmeldung: 30.08.2017
(73) Patentinhaber: Schuler Pressen GmbH, 73033 Göppingen (DE)
(72) Erfinder: KOSSE, Marcus, 73092 Heiningen (DE)
(74) Vertreter: Rüger Abel Patentanwälte PartGmbB
(86) Internationale Anmeldenummer: PCT/EP2015/073234
(87) Internationale Veröffentlichungsnummer: WO 2016/062544

(56) Entgegenhaltungen:
- EP-A1- 1 541 330
- CN-A- 102 320 155
- CN-A- 103 302 884
- CN-A- 104 001 846
- DE-A1-102010 031 100
- JP-A- S61 276 797
- JP-A- S61 277 342

## Beschreibung

Die Erfindung betrifft eine Pressenantriebsvorrichtung für eine Presse, die zum Antreiben eines Stößels der Presse dient. Die Erfindung betrifft außerdem eine Presse, die eine solche Pressenantriebsvorrichtung aufweist.

Pressenantriebsvorrichtungen zum Antreiben eines Pressenstößels sind in vielen verschiedenen Varianten bekannt. Es wurde bereits mehrfach vorgeschlagen, Elektromotoren oder Servomotoren in der Pressenantriebsvorrichtung einzusetzen. Beispielsweise beschreibt DE 10 2008 034 971 A1 eine Presse mit mehreren Direkt-Antriebsmodulen, die jeweils auf einen Druckpunkt des Stößels wirken. Im Direkt-Antriebsmodul kann ein Servomotor verwendet werden. Die Servomotoren verschiedener Direkt-Antriebsmodule können entweder mechanisch gekoppelt oder elektronisch synchronisiert sein. Bei elektronischer Synchronisierung mit vier Druckpunkten kann der Stößel um zwei senkrecht aufeinander stehende Achsen gedreht bzw. gekippt werden.

DE 10 2008 063 473 A1 schlägt einen modular aufbaubaren Pressenantrieb vor. Ein elektrischer Antriebsmotor, beispielsweise ein Servo- oder ein Torquemotor kann mit einem Getriebemodul an einer Schnittstelle der Presse angeordnet werden. In dem Motormodul kann außerdem eine Bremse vorhanden sein. Der Motor ist über ein Getriebemodul mit einer entsprechenden Schnittstelle an der Presse verbindbar.

Ein weiteres modulares Antriebssystem für eine Presse ist aus DE 10 2011 113 624 A1 bekannt. In einem Antriebsgehäuse ist eine Kurbelwelle über Radiallager gelagert. Seitlich am Antriebsgehäuse ist der Antrieb angeflanscht. An einem Pleuellager der Kurbelwelle ist ein Pleuel befestigt, das die Drehbewegung der Kurbelwelle in eine oszillierende Bewegung umsetzt. Eine Bremseinrichtung und ein Planetengetriebe kann zwischen dem Antrieb und dem Antriebsgehäuse angeordnet sein. Die Bremse und der Antrieb können auch an entgegensetzten Seiten mit dem Getriebe verbunden werden. Durch die Modulbauweise sind verschiedene Anordnungsmöglichkeiten geschaffen.

Aus EP 1 541 330 A1 geht eine Pressenantriebsvorrichtung mit den Merkmalen des Oberbegriffs des Patentanspruches 1 hervor. Die Pressenantriebsvorrichtung hat ein mit dem Stö-ßel der Pressen verbundenes Pleuel, das an einem Pleuellager exzentrisch an einer Antriebswelle gelagert ist. Die Antriebswelle ist auf beiden Seiten des Pleuellagers durch jeweils eine Hülse gelagert, erstreckt sich durch die Hülsen hindurch und bildet jeweils eine Rotornabe, auf der ein Rotor eines Servomotors angeordnet ist. Das jeweilige freie Ende der Rotornabe bzw. der Antriebswelle ist über jeweils ein weiteres Wälzlager zumindest radial gelagert.

JP S61 276797 A beschreibt eine Pressenantriebsvorrichtung mit einem Servomotor, der in Verlängerung einer exzentrischen Antriebswelle angeordnet ist. Die vom Rotor des Antriebsmotors angetriebene Motorwelle ist über ein Planetengetriebe mit der Antriebswelle antriebsgekoppelt. Die Lagerungen der Antriebswelle und die Lagerungen der Motorwelle sind separat ausgeführt.

CN 104001846 A offenbart eine Pressenantriebsvorrichtung mit einer exzentrischen Antriebswelle, die an zwei Stellen gelagert ist. Auch hier ist der Antriebsmotor über ein Planetengetriebe mit der exzentrischen Antriebswelle verbunden und separat gelagert.

Aus CN 103302884 A ist eine Pressenantriebsvorrichtung bekannt, bei der fluchtend entlang einer gemeinsamen Achse zwei Servomotoren angeordnet sind. Die Servomotoren sind drehfest mit einer dazwischen liegenden Antriebswelle gekoppelt, an der ein Pleuel gelagert ist. Die Antriebswelle ist zusätzlich zu den Motorwellen der Servomotoren gelagert.

CN 102 320 155 A offenbart eine Pressenantriebsvorrichtung gemäss dem Oberbegriff des Anspruchs 1.

Bisher wird die von der Presse beim Betrieb aufgenommene Energie nur zu einem geringen prozentualen Anteil, etwa 10 Prozent, in die Umformung eines Werkstücks umgewandelt. Die übrige Energie wird hauptsächlich durch Reibungs- und Wandlungsverluste in Wärme umgewandelt. Es kann daher als Aufgabe der vorliegenden Erfindung angesehen werden, eine Pressenantriebsvorrichtung bzw. eine Presse bereitzustellen, die eine höhere Energieeffizienz aufweist und eine hohe Dynamik der Stößelbewegung bereitstellt.

Die Aufgabe wird durch eine Pressenantriebsvorrichtung mit den Merkmalen des Patentanspruches 1 sowie eine Presse mit den Merkmalen des Patentanspruches 14 gelöst. Zu der Pressenantriebsvorrichtung gehört ein Pleuel, das ein Antriebsende und ein Abtriebsende aufweist. Das Abtriebsende ist vorzugsweise über ein Kniehebelgetriebe mit dem Stößel gekoppelt. Die Pressenantriebsvorrichtung weist außerdem eine Antriebswelle, beispielsweise eine Kurbelwelle oder eine Exzenterwelle auf. Die Antriebswelle ist um eine Wellenachse drehbar gelagert. Sie hat ein gegenüber der Wellenachse exzentrisch angeordnetes Pleuellager. An dem Pleuellager ist das Antriebsende des Pleuels gelagert.

Die Pressenantriebsvorrichtung weist wenigstens einen elektrischen Antriebsmotor, insbesondere einen Torquemotor, mit einem Stator und einem Rotor auf. Unter einem "Torquemotor" ist ein Servomotor zu verstehen, der für hohe Drehmomente bei geringeren Drehzahlen ausgelegt ist. Der Torquemotor weist eine hohe Polpaarzahl auf. Der Durchmesser eines Torquemotors ist vorzugsweise deutlich größer als dessen axiale Abmessung. Der Torquemotor benötigt in Axialrichtung lediglich einen geringen Bauraum.

Der Rotor wird von einer Rotornabe getragen. Der Rotor ist mit der Rotornabe drehfest verbunden. Der Rotor oder zumindest Teile davon und die Rotornabe können auch integral ohne Naht- und Fügestelle ausgeführt sein. Die Rotornabe wiederum ist drehfest mit der Antriebswelle gekoppelt. Eine Drehung des Rotors verursacht mithin eine Drehung der Rotornabe. Diese Verbindung ist vorzugsweise getriebelos und übersetzungslos bzw. untersetzungslos ausgeführt. Die Drehung des Rotors um einen bestimmten Drehwinkel um die Wellenachse verursacht somit die Drehung der Rotornabe und der Antriebswelle um denselben Drehwinkel.

Die Antriebswelle ist an einer ersten Lagerstelle über eine erste Lagereinrichtung und an einer zweiten Lagerstelle über eine zweite Lagereinrichtung drehbar gelagert. Die beiden Lagerstellen sind bezüglich des Pleuellagers auf axial entgegengesetzten Seiten angeordnet. Die erste Lagereinrichtung ist zwischen einem ersten Lagerteil und der Antriebswelle und die zweite Lagereinrichtung ist zwischen einem zweiten Lagerteil und der Antriebswelle angeordnet. Erfindungsgemäß sind der Rotor und die Rotornabe des wenigstens einen Antriebsmotors nicht zusätzlich gelagert. Die drehbare Lagerung des Rotors und der Rotornabe findet ausschließlich über die erste Lagereinrichtung und/oder die zweite Lagereinrichtung statt. Die Wellenachse erstreckt sich dabei vorzugsweise in einer Tiefenrichtung, in der auch der Werkstücktransport zu oder aus der Presse stattfindet.

Bei einer Ausführungsform ragt die Pressenantriebsvorrichtung nicht über die Außenkontur des Pressengestells hinaus. Unter der Außenkontur ist ein kleinstmöglicher Quader zu verstehen, in dem das Pressengestell angeordnet ist. Durch diese Ausgestaltung lässt sich eine kompakte Bauform der Pressenantriebsvorrichtung erreichen. Insbesondere ist es möglich, die Pressenantriebsvorrichtung am bzw. im Pressengestell, beispielsweise im Kopfteil einer Presse, anzuordnen. Außerdem ergibt sich der Vorteil, dass der Werkzeugwechsel vereinfacht ist, da der Bereich unmittelbar vor bzw. hinter der Presse von oben gut zugänglich ist und ein zu wechselndes Werkzeug beispielsweise über einen Kran direkt neben dem Pressengestell auf den Pressentisch abgelegt werden kann.

Die Reibungsverluste der Pressenantriebsvorrichtung sind minimiert. Die Antriebswelle und der Antriebsmotor sind über lediglich zwei Lagerstellen drehbar gelagert. Die erste Lagereinrichtung und/oder die zweite Lagereinrichtung sind vorzugsweise durch Wälzlagereinrichtungen gebildet, könnten für Pressen mit größeren Press- bzw. Pleuelkräften auch als Gleitlager ausgeführt sein. Dadurch, dass zwischen dem Antriebsmotor und der Antriebswelle keine Getriebeverzahnung vorhanden ist, entfallen getriebebedingte Energieverluste.

Über den elektrischen Antriebsmotor bzw. Torquemotor sind hohe Drehmomente realisierbar. Aufgrund der direkten Verbindung des Rotors mit der Antriebswelle sind hohe Drehbeschleunigungen bzw. Drehverzögerungen der Antriebswelle möglich. Diese werden über das Pleuel und das vorzugsweise vorhandene Kniehebelgetriebe auf den Stößel übertragen. Somit werden Beschleunigungen und Verzögerungen des Stößels mit hohen Beträgen erreicht. Die Pressenantriebsvorrichtung bzw. eine damit ausgestattete Presse hat somit neben der hohen Energieeffizienz auch eine hohe Dynamik. Die volle Drehzahl der Pressenantriebsvorrichtung ist bei einem Ausführungsbeispiel in weniger als 40 Millisekunden erreicht. Dies ist darauf zurückzuführen, dass die Pressenantriebsvorrichtung neben einer geringen Reibung auch im Verhältnis zum bereitgestellten Drehmoment lediglich geringe Massenträgheitsmomente aufweist.

Vorzugsweise bildet die erste Lagereinrichtung ein Festlager und die zweite Lagereinrichtung ein Loslager. Axiale Ausdehnungen der Antriebswelle führen daher nicht zu Spannungen in der Pressenantriebsvorrichtung. Ein axiales Auswandern der Antriebswelle wird durch das Festlager verhindert. Wenn nur ein Antriebsmotor mit der Antriebswelle verbunden ist, befindet sich der Antriebsmotor vorzugsweise auf der axialen Seite des Pleuellagers, auf der das Festlager vorhanden ist. Es ist auch möglich, den oder einen weiteren Antriebsmotor zusätzlich oder alternativ auf der Axialseite des Loslagers anzuordnen.

Bei dem bevorzugten Ausführungsbeispiel der Pressenantriebsvorrichtung ist der Rotor direkt mit der Antriebswelle verbunden. Insbesondere sitzt die Rotornabe unmittelbar auf der Antriebswelle.

Erfindungsgemäss sind wenigstens ein erstes und ein zweites Antriebsgehäuse vorhanden. Neben dem ersten und dem zweiten Antriebsgehäuse können zusätzlich weitere Antriebsgehäuse, beispielsweise ein drittes oder ein viertes Antriebsgehäuse vorhanden sein. Die Anzahl der Antriebsgehäuse kann somit auch größer als zwei sein. Jedes Antriebsgehäuse hat eine sich ringförmig geschlossen in Umfangsrichtung um die Wellenachse und/oder koaxial zu der Wellenachse erstreckende Umfangswand. Zumindest bei dem ersten und dem zweiten Antriebsgehäuse ist außerdem jeweils eine Innenwand vorhanden. Die Innenwand ist mit der Umfangswand auf der axialen Seite verbunden, die dem Pleuellager zugewandt ist und als Innenseite des ersten bzw. zweiten Antriebsgehäuses bezeichnet werden kann. Das Antriebsgehäuse hat somit eine topfförmige Gestalt. Die Innenwand ist im Bereich der Wellenachse durchbrochen.

Erfindungsgemäss ist das erste Lagerteil mit der ersten Lagerstelle Bestandteil des ersten Antriebsgehäuses und/oder das zweite Lagerteil mit der zweiten Lagerstelle Bestandteil des zweiten Antriebsgehäuses. Insbesondere ist die erste Lagerstelle an der Innenwand des ersten Antriebsgehäuses und die zweite Lagerstelle an der Innenwand des zweiten Antriebsgehäuses gebildet. Dort stützt sich die Antriebswelle über die betreffende Lagereinrichtung an der Innenwand ab. Bei dieser Anordnung ist die Antriebswelle somit nicht am Pressengestell, sondern ausschließlich an den beiden Antriebsgehäusen gelagert.

Vorzugsweise ist die Antriebswelle ausschließlich an der ersten Lagerstelle über die erste Lagereinrichtung und an der zweiten Lagerstelle über die zweite Lagereinrichtung gelagert. Weitere Lagerstellen zur drehbaren Lagerung der Antriebswelle oder drehfest mit der Antriebswelle verbundenen Bestandteile der Pressenantriebsvorrichtung sind nicht vorhanden.

Es ist weiterhin vorteilhaft, wenn das erste und das zweite Antriebsgehäuse jeweils einen Befestigungsflansch zur Befestigung an einem Pressengestell aufweist. Der Befestigungsflansch ist vorzugsweise an dem der Innenwand entgegengesetzten axialen Ende der Umfangswand angeordnet. Der Befestigungsflansch kann als Ringflansch ausgeführt sein. Das erste und das zweite Antriebsgehäuse wird vorzugsweise an zwei sich gegenüberliegenden Platten oder Wangen des Pressengestells derart montiert, dass lediglich der Ringflansch und die Befestigungsschrauben aus dem Zwischenraum herausragen, der durch die beiden Platten oder Wangen des Pressengestells definiert ist.

Ein optional vorhandenes drittes Antriebsgehäuse kann mit einem Verbindungsflansch an dem Befestigungsflansch des ersten oder zweiten Antriebsgehäuses befestigt sein. Es lassen sich auf diese Weise im Prinzip beliebig viele Antriebsgehäuse axial nebeneinander anordnen und mit dem ersten und/oder zweiten Antriebsgehäuse verbinden.

In einem oder mehreren der Antriebsgehäuse ist jeweils ein Antriebsmotor angeordnet. Der Gehäuseinnenraum stellt einen Bauraum für den Antriebsmotor bereit. Insbesondere ist der Stator an der der Wellenachse zugeordneten Innenfläche der Umfangswand angeordnet. Radial innerhalb des Stators ist der Rotor angeordnet.

Bei einem Ausführungsbeispiel ist eine Bremseinrichtung vorhanden. Die Bremseinrichtung ist dazu vorgesehen, im Notfall, beispielsweise bei einem Ausfall der elektrischen Energieversorgung, die Stößelbewegung zu stoppen. In einem oder mehreren der vorhandenen Antriebsgehäuse kann jeweils eine Bremseinrichtung angeordnet sein.

Bei einem bevorzugten Ausführungsbeispiel hat der Rotor eine hohlzylindrische Gestalt. Vorzugsweise trägt der Rotor an seiner dem Stator zugewandten Seite Permanentmagnete. An einem axialen Ende ist der Rotor an der Rotornabe befestigt. Radial innerhalb des hohlzylindrischen Rotors ist dadurch ein Bauraum geschaffen, in dem eine weitere Komponente der Pressenantriebsvorrichtung angeordnet werden kann. Beispielsweise ist es möglich, in einem Antriebsgehäuse sowohl einen Antriebsmotor als auch eine Bremseinrichtung anzuordnen. Dabei kann die Bremseinrichtung axial zumindest teilweise in den Bauraum zwischen dem Rotor und der Wellenachse eingreifen. Vorzugsweise ist die Bremseinrichtung dabei axial benachbart zur Rotornabe angeordnet.

Der Rotor und/oder die Rotornabe und/oder andere drehfest mit der Antriebswelle verbundenen Teile können durch Vergrößerung ihrer Masse und/oder durch Anbringen von wenigstens einem Schwungmassenelement als Schwungmasse dienen. Der im Gehäuseinnenraum verfügbare freie Bauraum kann ausgenutzt werden, um eine solche zusätzliche Schwungmasse bereitzustellen. Die zusätzliche Schwungmasse muss unwuchtfrei angeordnet werden.

Bei einem vorteilhaften Ausfügungsbeispiel hat die Rotornabe eine Hohlwelle, die die Antriebswelle umschließt. Die Hohlwelle kann in Drehrichtung, also in Umfangsrichtung um die Wellenachse kraftschlüssig und/oder formschlüssig mit der Antriebswelle verbunden sein. Von der Hohlwelle können sich Speichen oder kann sich eine Scheibe im Wesentlichen radial oder schräg zur Wellenachse erstrecken, wobei der Rotor durch die Scheibe bzw. die Speichen getragen ist.

Eine Presse gemäß der vorliegenden Erfindung kann eine oder mehrere der vorstehend beschriebenen Pressenantriebsvorrichtungen aufweisen. Jeder Pressenantriebsvorrichtung ist insbesondere ein Kniehebelgetriebe zugeordnet, das vom Pleuel der Pressenantriebsvorrichtung beaufschlagt wird. Weist die Presse mehrere Pressenantriebsvorrichtungen auf, sind diese mechanisch nicht miteinander gekoppelt. Jede in der Presse verwendete Pressenantriebsvorrichtung kann den Drehwinkel der Antriebswelle und mithin die Stellung des Pleuels bzw. des damit jeweils verbundenen Kniehebelgetriebes unabhängig von den anderen Pressenantriebsvorrichtungen einstellen. Die Pressenantriebsvorrichtungen werden durch eine Pressensteuerung koordiniert und sozusagen steuerungstechnisch gekoppelt.

Vorteilhafte Ausgestaltungen der Erfindung ergeben sich aus den abhängigen Patentansprüchen, sowie der Beschreibung. Die Erfindung wird nachfolgend anhand der beigefügten Zeichnung im Einzelnen erläutert. Es zeigen:
- Fig. 1: eine perspektivische Ansicht eines Ausführungsbeispiels einer Presse mit zwei Pressenantriebsvorrichtungen,
- Fig. 2: die Presse aus Fig. 1 in einer Vorderansicht,
- Fig. 3: die Presse aus den Fig. 1 und 2 in einer Seitenansicht,
- Fig. 4: die Presse gem. der Fig. 1-3 in einer Draufsicht,
- Fig. 5: eine geschnittene Teildarstellung der Presse gem. der Fig. 1-4 in einem Schnittbild gem. der Schnittlinie V-V in Fig. 2,
- Fig. 6: eine Teildarstellung der Presse gem. der Fig. 1 bis 5 im Schnittbild gem. der Schnittlinie VI-VI in Fig. 2,
- Fig. 7: eine Detailansicht einer der beiden Pressenantriebsvorrichtungen mit den beiden Antriebsgehäusen im Schnittbild gem. Fig. 5 entlang einer Wellenachse einer Antriebswelle der Pressenantriebsvorrichtung,
- Fig. 8: einen Pressenstößel und die Stößelführung der Presse gem. der Fig. 1 bis 7 in perspektivischer Ansicht, sowie eine schematische Darstellung eines Ausführungsbeispiels eines Kniehebelgetriebes der Presse,
- Fig. 9-11: jeweils ein Blockschaltbild unterschiedlicher Konfigurationen einer Pressenantriebsvorrichtung in jeweils einem schematischen Schnittbild entlang der Wellenachse,
- Fig. 12: eine schematische Prinzipdarstellung eines abgewandelten Ausführungsbeispiels eines Kniehebelgetriebes der Presse,
- Fig. 13: eine schematische Prinzipdarstellung einer Lageranordnung für ein Kniehebelgetriebe und
- Fig. 14: eine schematische Prinzipdarstellung einer weiteren Lageranordnung für ein Kniehebelgetriebe.

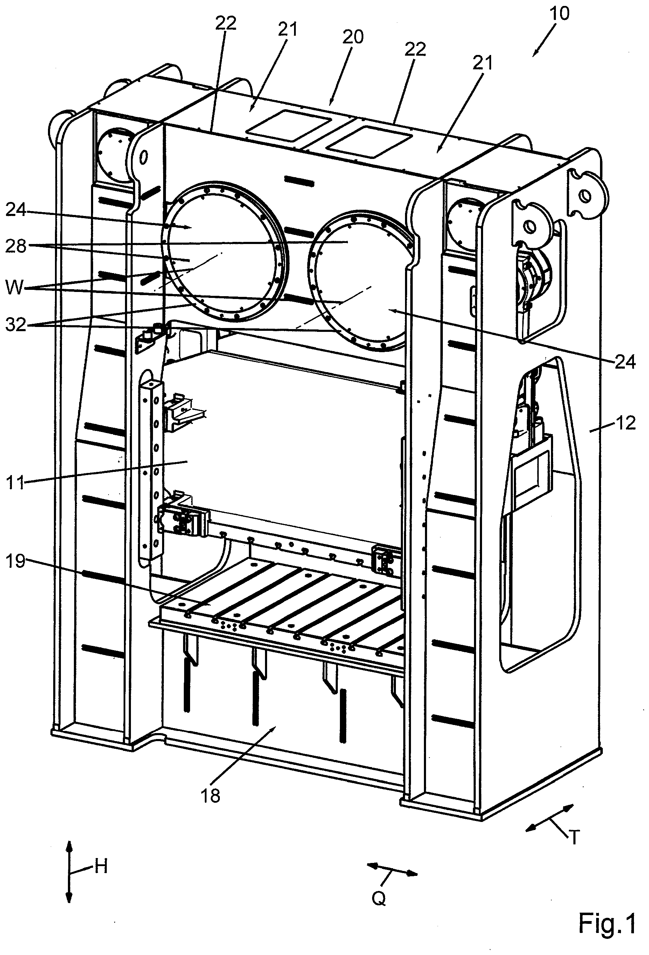

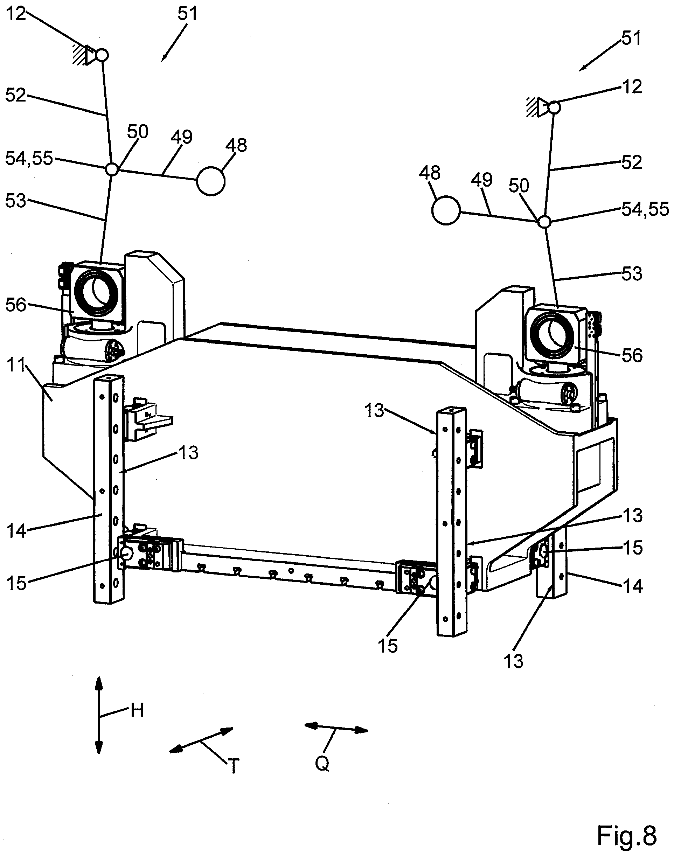

In den Fig. 1 bis 4 ist ein Ausführungsbeispiel einer Presse 10 in verschiedenen Ansichten dargestellt. Die Presse 10 weist einen Stößel 11 auf, der in einer Hubrichtung H, insbesondere in Vertikalrichtung, an einem Pressengestell 12 geführt bewegbar gelagert ist. Zur Führung des Stößels 11 dienen beispielsgemäß an dem Stößel 11 befestigte Rollen 15, die an einer jeweils zugeordneten Anlagefläche 13 eines pressengestellseitigen Führungselements 14 anliegen (Fig. 8) .

Das Pressengestell 12 weist ein Fußteil 18 mit einem Pressentisch 19 auf. Auf dem Pressentisch 19 kann ein Unterwerkzeug angeordnet werden. Mit dem Unterwerkzeug kann ein Oberwerkzeug zusammenwirken, das am Stößel 11 angeordnet wird. Bei der hier beschriebenen Presse 10 ist das Unterwerkzeug relativ zum Pressengestell 12 unbeweglich angeordnet. Lediglich das Oberwerkzeug kann mittels des Stößels 11 relativ zum Pressengestell und zum Unterwerkzeug bewegt werden. Die Presse 10 kann zum Schneiden und/oder Stanzen, Prägen und/oder Ziehen und/oder Biegen und/oder für andere Umformverfahren verwendet werden.

Das Pressengestell 12 weist außerdem ein Kopfteil 20 auf. Der Stößel 11 befindet sich zwischen dem Kopfteil 20 und dem Fußteil 18. Bei dem hier veranschaulichten Ausführungsbeispiel ist die Presse 10 als Monoblock-Presse ausgeführt, wobei das Fußteil 18 und das Kopfteil 20 des Pressengestells 12 über zwei in einer Querrichtung Q mit Abstand zueinander angeordnete Verbindungsteile bzw. Seitenständer miteinander verbunden sind, die sich jeweils vom Fußteil 18 zum Kopfteil 20 in Hubrichtung H erstrecken. In Abwandlung hierzu könnte die Presse 10 auch als C-Gestell-Presse ausgeführt sein oder in geteilter Bauweise, bei der die Pressenelemente (Kopfstück, Ständer, Pressentisch) in geeigneter Weise verbunden sind.

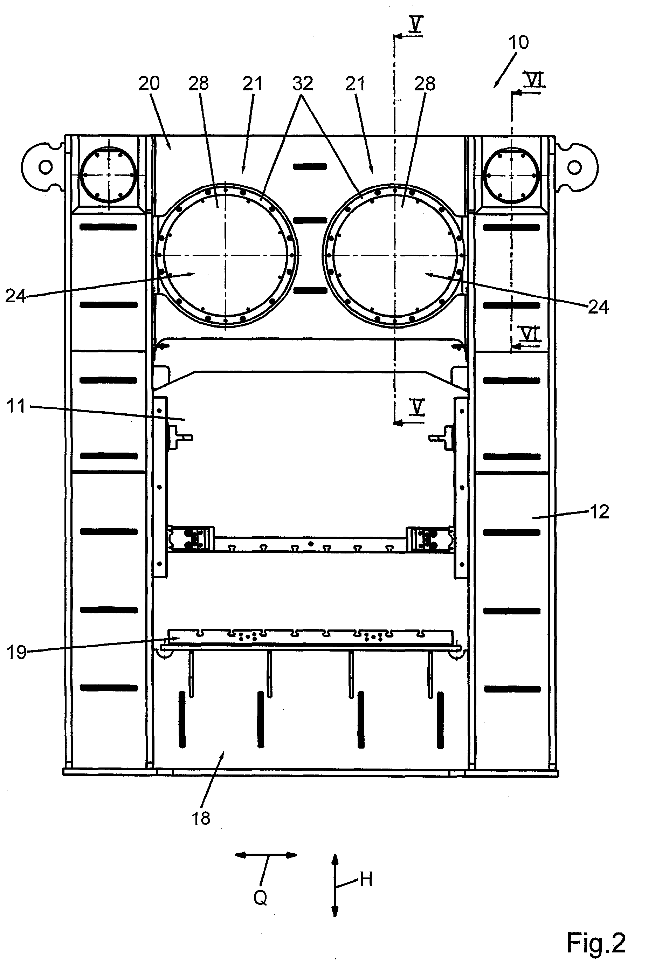

Eine Tiefenrichtung T ist rechtwinklig zur Hubrichtung H und zur Querrichtung Q orientiert. In Tiefenrichtung T betrachtet hat die Presse 10 eine Vorderseite (Fig. 2) und der Vorderseite entgegengesetzt eine Rückseite. Bei der hier veranschaulichten Presse 10 findet der Transport eines Werkstücks von der Vorderseite oder der Rückseite in die Presse 10 bzw. aus der Presse 10 zur Vorderseite oder zur Rückseite statt.

Am Kopfteil 20 ist wenigstens eine und bei dem hier beschriebenen Ausführungsbeispiel zwei Pressenantriebsvorrichtungen 21 angeordnet. Die wenigstens eine Pressenantriebsvorrichtung 21 dient zum Bewegen des Stößels 11 in Hubrichtung H.

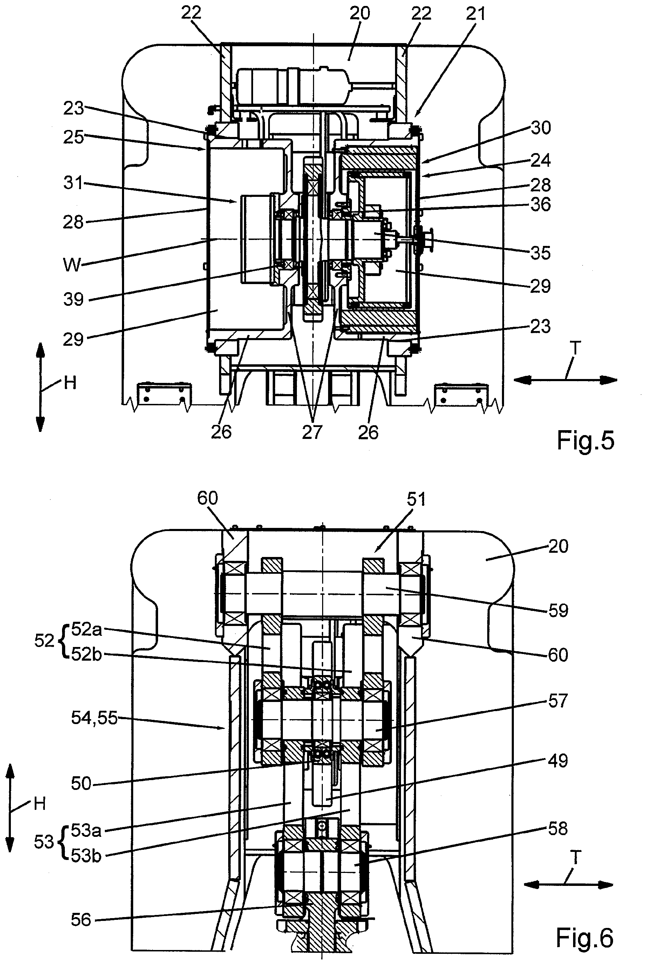

Am Kopfteil 20 weist das Pressengestell 12 zwei in Tiefenrichtung T beabstandete Pressengestellplatten 22 auf. Die Pressengestellplatten 22 erstrecken sich in einer Ebene, die durch die Querrichtung Q und die Hubrichtung H definiert ist. Die beiden Pressengestellplatten 22 weisen für jede Pressenantriebsvorrichtung 21 jeweils eine kreisrunde Aufnahmeöffnung 23 auf (Fig. 5). Die Aufnahmeöffnungen 23 in den beiden Pressengestellplatten 22 für eine gemeinsame Pressenantriebsvorrichtung 21 sind in Tiefenrichtung T fluchtend und koaxial um eine Wellenachse W der betreffenden Pressenantriebsvorrichtung 21 angeordnet.

Jede Pressenantriebsvorrichtung 21 weist ein erstes Antriebsgehäuse 24 und ein zweites Antriebsgehäuse 25 auf. Das erste Antriebsgehäuse 24 ist in der einen Pressengestellwand 22 und das zweiten Antriebsgehäuse 25 in der jeweils anderen Pressengestellwand 22 jeweils koaxial zu derselben Wellenachse W angeordnet. Die Wellenachse W jeder Pressenantriebsvorrichtung 21 erstreckt sich in Tiefenrichtung T.

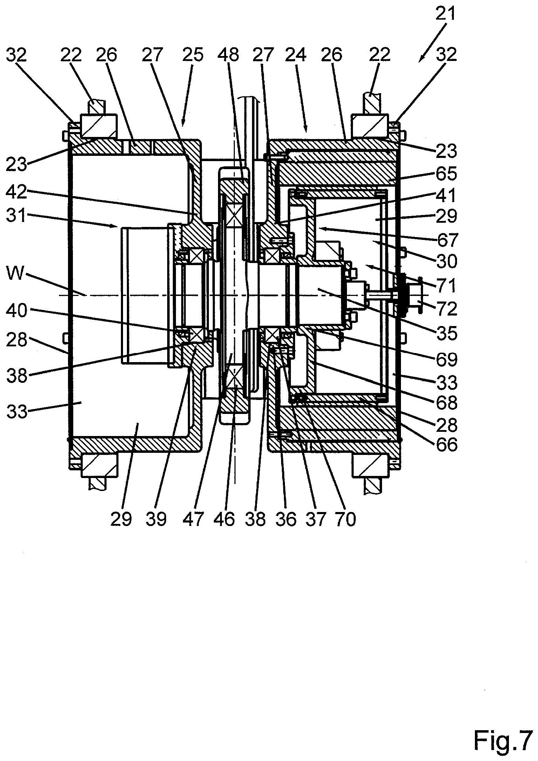

Jedes Antriebsgehäuse 24, 25 weist eine koaxial zur jeweiligen Wellenachse W angeordnete ringförmige Umfangswand 26, sowie eine Innenwand 27 auf. Die Innenwand 27 verläuft im Wesentlichen radial zur jeweiligen Wellenachse W. Die Innenwand 27 eines jeweiligen Antriebsgehäuses 24, 25 befindet sich an der axialen Seite, an der das Antriebsgehäuse 24, 25 dem jeweils anderen Antriebsgehäuse 25 bzw. 24 zugewandt ist. An der der Innenwand 27 axial gegenüberliegenden Seite hat das jeweilige Antriebsgehäuse 24, 25 eine Gehäuseöffnung 33 (Fig. 7), die durch einen Deckel 28 verschlossen ist. In jedem Antriebsgehäuse 24, 25 ist somit ein im Wesentlichen zylindrisch konturierter Gehäuseinnenraum 29 gebildet. In dem Gehäuseinnenraum 29 kann ein Antriebsmotor 30 und/oder eine Bremseinrichtung 31 angeordnet werden.

Das erste Antriebsgehäuse 24 sowie das zweite Antriebsgehäuse 25 hat jeweils auf der der Innenwand 27 entgegengesetzten Axialseite ein Befestigungsmittel, um das jeweilige Antriebsgehäuse 24, 25 an der zugeordneten Pressengestellplatte 22 zu befestigen. Als Befestigungsmittel dient beispielsgemäß wenigstens ein Befestigungsflansch 32. Der Befestigungsflansch 32 ist beim hier veranschaulichten Ausführungsbeispiel als Ringflansch ausgeführt und umschließt die Gehäuseöffnung 33 des betreffenden Antriebsgehäuses 24, 25 vollständig. Über Löcher im Befestigungsflansch 32 kann das Antriebsgehäuse 24, 25 an der jeweils zugeordneten Pressengestellplatte 22 verschraubt werden.

Jede Antriebsvorrichtung 21 weist eine Antriebswelle 35 auf. Die Antriebswelle 35 ist beispielsgemäß als Exzenterwelle ausgeführt und könnte in Abwandlung hierzu auch durch eine Kurbelwelle gebildet sein. Die Antriebswelle 35 erstreckt sich entlang der Wellenachse W und ist drehbar um die Wellenachse W gelagert. Zur Lagerung der Antriebswelle 35 ist an einer ersten Lagerstelle 36 eine erste Lagereinrichtung 37 vorgesehen. Die erste Lagerstelle 36 ist in einer zylindrischen Lageraussparung 38 der Innenwand 27 des ersten Antriebsgehäuses 24 gebildet. Zwischen der Lageraussparung 38 und der Antriebswelle 35 ist die erste Lagereinrichtung 37 angeordnet. Die Antriebswelle 35 ist außerdem an einer zweiten Lagerstelle 39, die beispielsgemäß durch eine Lageraussparung 38 in der Innenwand 27 des zweiten Antriebsgehäuses 25 gebildet ist, mittels einer zweiten Lagereinrichtung 40 gelagert. Die zweite Lagereinrichtung 40 ist zwischen der Lageraussparung 38 und der Antriebswelle 35 angeordnet.

Die Antriebswelle 35 ist beispielsgemäß ausschließlich über die beiden Lagereinrichtungen 37, 40 an der ersten Lagerstelle 36 bzw. der zweiten Lagerstelle 39 gelagert. Zusätzliche Lagerstellen sind nicht vorhanden.

Bei dem hier beschriebenen Ausführungsbeispiel bilden somit die Innenwände 27 mit den Lageraussparungen 38 ein erstes Lagerteil 41 für die erste Lagerstelle 36 und ein zweites Lagerteil 42 für die zweite Lagerstelle 39. In Abwandlung zu diesem Ausführungsbeispiel könnte das erste Lagerteil 41 und/oder das zweite Lagerteil 42 auch durch ein Element des Maschinengestells gebildet sein.

Zumindest eine der Lagerstellen, beispielsgemäß die erste Lagerstelle 36 ist als Festlager ausgeführt, um ein axiales Verschieben der Antriebswelle 35 zu vermeiden. Die jeweils andere Lagerstelle und beispielsgemäß die zweite Lagerstelle 39 ist als Loslager ausgeführt, um Verspannungen und Zwangskräfte in der Pressenantriebsvorrichtungen 21 zu vermeiden.

Zwischen den beiden Lagerstellen 36, 39 hat die Antriebswelle 35 ein Pleuellager 46. Das Pleuellager 46 ist exzentrisch zur Wellenachse W angeordnet. Beispielsgemäß sitzt das Pleuellager 46 auf einem exzentrisch zur Wellenachse W angeordneten Exzenterteil 47 der Antriebswelle 35.

Bei dem hier beschriebenen Ausführungsbeispiel sind die beiden Lagereinrichtungen 37, 40 durch Wälzlager gebildet. Das Pleuellager 46 ist beim Ausführungsbeispiel ebenfalls als Wälzlager ausgeführt.

Mittels des Pleuellagers 46 ist die Antriebswelle 35 und beispielsgemäß das Exzenterteil 47 mit einem Antriebsende 48 eines Pleuels 49 verbunden. Das Pleuel 49 einer jeweiligen Pressenantriebsvorrichtung 21 erstreckt sich abhängig von der Drehwinkelstellung der Antriebswelle 35 in etwa in Querrichtung Q oder leicht schräg hierzu. An dem dem Antriebsende 48 entgegengesetzten Ende hat das Pleuel 49 ein Abtriebsende 50.

Das Abtriebsende 50 des Pleuels 49 ist bei der hier beschriebenen Presse 10 mit einem zugeordneten Kniehebelgetriebe 51 gekoppelt. Es wäre auch möglich, das Abtriebsende des Pleuels 49 über ein Exzentergetriebe oder auch direkt mit dem Pressenstößel 11 zu koppeln.

Jeder Pressenantriebsvorrichtung 21 ist ein Kniehebelgetriebe 51 zugeordnet. Die beispielsgemäß zwei Kniehebelgetriebe 51 sind stark schematisiert in Fig. 8 veranschaulicht. Die konkrete Anordnung eines Kniehebelgetriebes 51 in der Presse 10 ist aus Fig. 6 zu erkennen. Jedes Kniehebelgetriebe 51 weist einen ersten Kniehebel 52 und einen zweiten Kniehebel 53 auf. Die beiden Kniehebel 52, 53 sind über eine Gelenkverbindung 54 und beispielsgemäß ein Kniegelenk 55 gelenkig miteinander verbunden. Der zweite Kniehebel 53 ist außerdem gelenkig mit einem Druckpunkt 56 verbunden. Der erste Kniehebel 52 ist jeweils an seinem dem Kniegelenk 55 entgegengesetzten Ende gelenkig mit dem Pressengestell 12 verbunden.

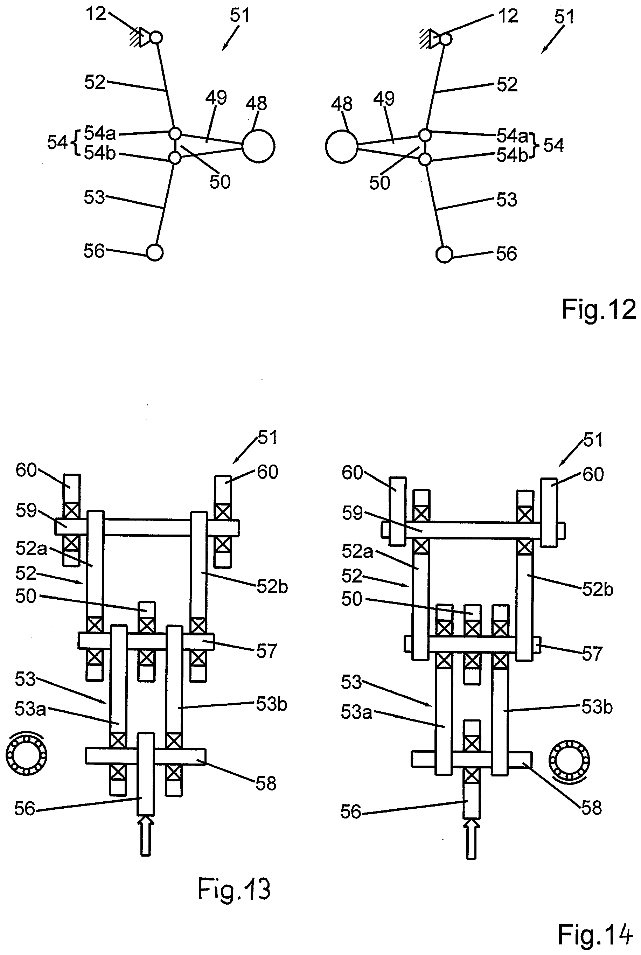

Fig. 12 zeigt eine abgewandelte Ausgestaltung der Gelenkverbindung 54. Das Pleuel 49 weist drei Gelenkpunkte auf, nämlich einen am Antriebsende 48 (wie in Fig. 8), einen Gelenkpunkt 54a zur Verbindung mit dem ersten Kniehebel 52 und einen Gelenkpunkt 54b zur Verbindung mit dem zweiten Kniehebel 53. Im Übrigen entspricht das Kniehebelgetriebe 51 dem Kniehebelgetriebe 51 aus Fig. 8.

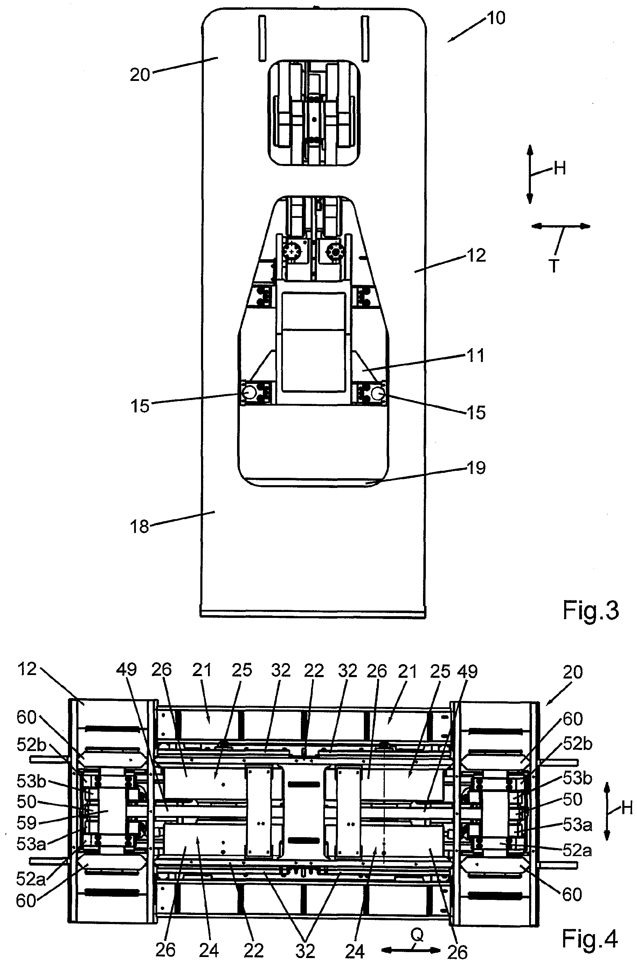

Wie in den Fig. 6 und 13 und teilweise auch in Fig. 3 zu erkennen ist, ist das Kniegelenk 55 durch einen Kniegelenkzapfen 57 gebildet, an dem das Abtriebsende 50 des Pleuels 49 gelagert ist. Der zweite Kniehebel 53 ist beispielsgemäß durch zwei Kniehebelelemente 53a, 53b gebildet, die an einem Ende den Kniegelenkzapfen 57 umgreifen und am anderen Ende mit Hilfe eines ersten Lagerzapfens 58 gelenkig mit dem jeweils zugeordneten Druckpunkt 56 des Stößels 11 verbunden sind. Die beiden Kniehebelelemente 53a, 53b sind in axialer Richtung des Kniegelenkzapfens 57 auf entgegengesetzten Seiten des Abtriebsendes 50 des Pleuels 49 angeordnet.

Entsprechend dem zweiten Kniehebel 53 ist auch der erste Kniehebel 52 durch zwei Kniehebelelemente 52a, 52b gebildet. Die beiden Kniehebelelemente 52a, 52b sind auf entgegengesetzten Seiten des Kniegelenkzapfens 57 angeordnet, so dass sich das Abtriebsende 50 des Pleuels 49 sowie die dem Kniegelenk 55 zugeordneten Enden der beiden Kniehebelelemente 53a, 53b des zweiten Kniehebels 53 dazwischen befinden. In Tiefenrichtung T betrachtet ist der Abstand zwischen den beiden Kniehebelelementen 52a, 52b des ersten Kniehebels 52 größer als der Abstand zwischen den beiden Kniehebelelementen 53a, 53b des zweiten Kniehebels 53. In Abwandlung zu dem dargestellten Ausführungsbeispiel ist es auch möglich, das Abtriebsende 50 des Pleuels 49 gabelförmig auszuführen. Der erste Kniehebel 52 und/oder der zweite Kniehebel 53 könnten auch nur mit jeweils einem Kniehebelelement 52a oder 52b bzw. 53a oder 53b ausgeführt sein.

An dem dem Kniegelenk 55 entgegengesetzten Ende sind die beiden Kniehebelelemente 52a, 52b des ersten Kniehebels 52 über einen zweiten Lagerzapfen 59 gelenkig am Pressengestell 12 gelagert. Der zweite Lagerzapfen 59 ist an seinen beiden axialen Enden beispielsgemäß in einer Lagerausnehmung einer Wange 60 des Pressengestells 12 gelagert. Die beiden Wangen 60 zur Lagerung des zweiten Lagerzapfens 59 haben beim Ausführungsbeispiel in Tiefenrichtung T denselben Abstand wie die beiden Pressengestellplatten 22 (Fig. 1 und 4).

Wie in den Fig. 6 und 13 veranschaulicht, sind die relativ zueinander drehbaren Elemente des Kniehebelgetriebes 51 über Wälzlager gelagert. Beispielsweise ist der zweite Lagerzapfen 59 über jeweils ein Wälzlager an den Wangen 60 des Pressengestells 12 gelagert. Die beiden Kniehebelelemente 52a, 52b des ersten Kniehebels 52 sitzen drehfest auf dem zweiten Lagerzapfen 59 und sind über jeweils ein Wälzlager drehbar am Kniegelenkzapfen 57 gelagert. Die beiden Kniehebelelemente 53a, 53b des zweiten Kniehebels 53 sitzen drehfest auf dem Kniegelenkzapfen 57 und sind über jeweils ein Wälzlager drehbar am ersten Lagerzapfen 58 gelagert. Der erste Lagerzapfen 58 ist am Druckpunkt 56 drehfest mit dem Stößel 11 verbunden.

In Fig. 13 ist zu erkennen, dass die Wälzlager durch die Einleitung der Pressenkraft am Druckpunkt 56 in Hubrichtung an ihrer oberen Seite belastet werden. In einer alternativen Ausführung nach Fig. 14 ist die Belastungszone der Lager im unteren Bereich. Dies ist dadurch erreicht, dass die Lager im Unterschied zu der Anordnung aus Fig. 13 zwischen den Kniehebelelementen 52a, 52b des ersten Kniehebels 52 und dem zweiten Lagerzapfen 59, zwischen den Kniehebelelementen 53a, 53b des zweiten Kniehebels 53 und dem Kniegelenkzapfen 57, sowie zwischen dem Druckpunkt 56 und dem ersten Lagerzapfen 58 angeordnet sind. Der erste Lagerzapfen 58 ist drehfest mit den Kniehebelelementen 53a, 53b des zweiten Kniehebels 53 verbunden. Der Kniegelenkzapfen 57 ist drehfest mit den Kniehebelelementen 52a, 52b des ersten Kniehebels 52 verbunden und der zweite Lagerzapfen 59 sitzt drehfest in den Wangen 60 des Pressengestells 12.

Die Anordnung nach Fig. 14 hat gegenüber der Anordnung nach Fig. 13 den Vorteil, dass sich alle Lager innerhalb der Außenkontur des Pressengestells bzw. Pressenkörpers befinden. Dies erleichtert die Abdichtung des Pressenkörpers, insbesondere bei Gleitlagerungen mit Öl-bzw. Fettschmierung.

Anstelle der beispielsgemäß zur Lagerung eingesetzten Wälzlager könnten prinzipiell auch andere Lager verwendet werden, wie etwa Gleitlager. Gleitlager können vorteilhaft sein, wenn an der betreffenden Einbaustelle des Lagers grö-ßere Kräfte wirken, die nur durch sehr teure Wälzlager aufgenommen werden können.

Beim Ausführungsbeispiel hat der Stößel 11 der Presse 10 zwei in Querrichtung Q mit Abstand angeordnete Druckpunkte 56. Die Druckpunkte 56 sind entlang einer sich in Querrichtung Q erstreckenden Geraden angeordnet. Der Abstand der beiden Druckpunkte 56 ist größer als die Abmessung des Pressentischs 19 in Querrichtung Q. Die beiden Druckpunkte 56 befinden sich daher nicht über dem Pressentisch 19, sondern in Querrichtung Q betrachtet nahe an den beiden Seitenständern des Pressengestells, die das Fußteil 18 und das Kopfteil 20 miteinander verbinden. Dadurch entfällt eine Biegebeanspruchung des Kopfteils 20 und die Pressensteifigkeit wird erhöht.

Wie erläutert, weist jede Pressenantriebsvorrichtung 21 wenigstens einen elektrischen Antriebsmotor 30 auf. Der wenigstens eine Antriebsmotor 30 ist im ersten Antriebsgehäuse 24 oder im zweiten Antriebsgehäuse 25 angeordnet. Es ist auch möglich, in beiden Antriebsgehäusen 24, 25 jeweils einen Antriebsmotor 30 anzuordnen. Beim hier beschriebenen Ausführungsbeispiel gemäß der Fig. 1 bis 8 weist jede Pressenantriebsvorrichtung 21 einen einzigen Antriebsmotor 30 auf.

Der Antriebsmotor 30 ist beispielsgemäß im ersten Antriebsgehäuse 24 angeordnet. Er hat einen Stator 65 der koaxial zur Wellenachse W angeordnet ist. Der Stator 65 ist beispielsgemäß an der der Wellenachse W zugewandten Innenfläche der Umfangswand 26 befestigt.

Radial bezüglich der Wellenachse W ist innerhalb des Stators 65 ein ringförmiger Rotor 66 koaxial um die Wellenachse W angeordnet. Der Rotor 66 trägt beim Ausführungsbeispiel Permanentmagnete. Die Erregerspulen sind im Stator 65 angeordnet. Der Antriebsmotor 30 ist vorzugsweise als Servomotor bzw. Torquemotor ausgeführt. Der Torquemotor hat im Unterschied zu Servomotoren eine hohe Polpaarzahl und ist für geringere Drehzahlen und höhere Drehmomente ausgelegt. Deswegen ist sein Durchmesser im Vergleich zu seiner axialen Baugröße beispielsgemäß deutlich größer.

Der Rotor 66 des Antriebsmotors 30 ist an seinem der Innenwand 27 zugeordneten Ende an einer Rotornabe 67 befestigt. Die Rotornabe 67 weist beispielsgemäß eine sich radial oder schräg zur Wellenachse W erstreckende Scheibe 68 auf. Das radial innere Ende dieser Scheibe 68 ist mit einer Hohlwelle 69 verbunden, die auf der Antriebswelle 35 sitzt. Die Hohlwelle 69 kann in Drehrichtung um die Wellenachse W formschlüssig und/oder kraftschlüssig mit der Antriebswelle 35 verbunden sein. An dem der Hohlwelle 69 entgegengesetzten radial äußeren Ende weist die Rotornabe 67 ein Halteteil 70 auf, an dem der Rotor 66 befestigt ist. Das Halteteil 70 hat beim Ausführungsbeispiel einen sich koaxial zur Wellenachse W erstreckenden Ringabschnitt, der vom zugeordneten axialen Ende des Rotors 60 koaxial umschlossen wird.

Anstelle der Scheibe 68 könnten zwischen der Hohlwelle 69 und dem Halteteil 70 auch mehrere Speichen verlaufen.

Die Rotornabe 67 ist vorzugsweise einstückig ohne Naht- und Fügestelle ausgeführt. Die Rotornabe 67 und der daran befestigte Rotor 66 haben insgesamt eine felgenähnliche Gestalt. Radial innerhalb des Rotors 66 und axial benachbart zur Scheibe 68 bzw. zur Rotornabe 67 verbleibt ein Bauraum oder Aufnahmeraum 71. In diesem Aufnahmeraum 71 ist ausreichend Platz, wenn in einem Antriebsgehäuse zusätzlich zu einem Antriebsmotor 30 eine Bremseinrichtung 31 angeordnet werden soll.

Der Rotor 66 ist über die Rotornabe 67 drehfest mit der Antriebswelle 35 verbunden. Eine Drehung des Rotors 66 um einen vorgegebenen Drehwinkel um die Wellenachse W führt somit zur Drehung der Antriebswelle 35 um denselben Drehwinkel. Eine Übersetzung oder Untersetzung zwischen der Drehbewegung des Rotors 66 und der Drehbewegung der Antriebswelle 35 ist nicht vorhanden. Die mechanische Verbindung zwischen dem Rotor 66 und der Antriebswelle 35 ist getriebelos und insbesondere spielfrei.

Der Rotor 66 und die Rotornabe 67 sind ausschließlich über die zur Lagerung der Antriebswelle 35 dienenden Lagereinrichtungen 37, 40 gelagert. Separate, zusätzliche Motorlager entfallen.

An wenigstens einem Antriebsgehäuse 24, 25 und beispielsgemäß am ersten Antriebsgehäuse 24 ist ein Sensor 72 angeordnet. Der Sensor 72 sitzt beispielsgemäß in Verlängerung der Antriebswelle 35 und wird durch die Wellenachse W durchsetzt. Das Sensorgehäuse befindet sich außerhalb des Gehäuseinnenraums 29 und kann beispielsgemäß an dem das erste Antriebsgehäuse 24 verschließenden Deckel 28 angeordnet sein. Der Sensor 72 dient zur Erfassung der Drehlage des Antriebsmotors 30. Die Drehlagenerfassung kann berührend oder berührungslos erfolgen. Jedem Antriebsmotor 30 bzw. jeder Antriebswelle 35 ist vorzugsweise wenigstens ein Sensor 72 zugeordnet.

Der Sensor 72 kann auch zur Ermittlung der Position des Stößels 11 in Hubrichtung H verwendet werden. Dies ist bei der vorliegenden Ausführung der Presse 10 sehr einfach, weil die Drehlage des Rotors 66 des Antriebsmotors 30 unmittelbar mit der Drehlage der Antriebswelle 35 übereinstimmt (Motorwinkel = Pressenwinkel). Deren Drehlage bestimmt die Position des Stößels 11 in Hubrichtung H.

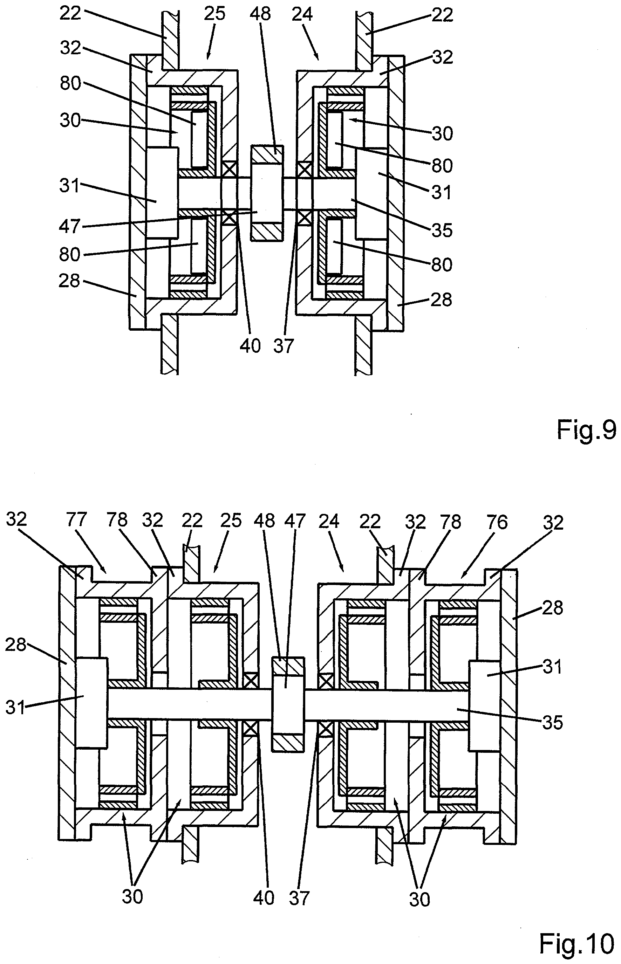

Sind mehrere Antriebsmotoren 30 mit einer gemeinsamen Antriebswelle 35 verbunden (Fig. 9-11), so wird die Drehlage beider Antriebsmotoren 30 mittels eines gemeinsamen Sensors 72 bestimmt. Die Antriebsmotoren 30 werden dazu in übereinstimmenden Drehlagen montiert.

Wie insbesondere aus den Fig. 1, 4, 5 und 7 zu erkennen ist, befinden sich das erste Antriebsgehäuse 24 sowie das zweite Antriebsgehäuse 25 nahezu vollständig zwischen den beiden Pressengestellplatten 22. Lediglich der Befestigungsflansch 32, der Deckel 28 sowie ein optional am Deckel 28 angeordneter Sensor 72 befinden sich außerhalb der Kontur, die durch die beiden Maschinengestellplatten 22 definiert ist. Der Antriebsmotor 30 und/oder die Bremseinrichtung 31, die innerhalb des Gehäuseinnenraums 29 angeordnet sind, befinden sich vollständig in dem Raum zwischen den beiden voneinander abgewandten Außenflächen der Pressengestellplatten 22.

Die Bremseinrichtung 31 ist bei dem Ausführungsbeispiel gemäß der Fig. 1 bis 8 im zweiten Antriebsgehäuse 25 angeordnet. Ein Bremsenteil ist fest mit dem zweiten Antriebsgehäuse 25 und beispielsgemäß der Innenwand 27 verbunden, während der andere Bremsenteil drehfest mit der Antriebswelle 35 verbunden ist. An der Innenseite der Innenwand 27 sind beispielsgemäß entsprechende Befestigungsmittel für die Bremseinrichtung 31 bzw. deren gehäusefesten Teil vorhanden. Bei Auftreten einer Notsituation, beispielsweise bei einem Ausfall der elektrischen Energieversorgung für die Pressenantriebsvorrichtung 21, wird die Bremseinrichtung 31 ausgelöst und stoppt die Drehbewegung der Antriebswelle 35 und mithin die oszillierende Bewegung des Stößels 11. Jede Antriebsvorrichtung 21 weist wenigstens eine Bremseinrichtung 31 auf.

Die Presse 10 verfügt über keine hydraulische Überlastsicherung. Die Überlastsicherung wird durch eine elektrische bzw. elektronische Ansteuerung des wenigstens einen elektrischen Antriebsmotors 30 jeder Pressenantriebsvorrichtung 21 ausgeführt.

Die elektrischen Antriebsmotoren 30 unterschiedlicher Pressenantriebsvorrichtungen 21 sind mechanisch nicht miteinander zwangsgekoppelt. Das koordinierte Drehen der elektrischen Antriebsmotoren 30 unterschiedlicher Pressenantriebsvorrichtungen 21 um die jeweils zugeordnete Wellenachse W erfolgt durch die Pressensteuerung. Es erfolgt also eine Koordinierung der Drehbewegungen der Antriebsmotoren 30 unterschiedlicher Pressenantriebsvorrichtungen 21 durch steuerungstechnische bzw. regelungstechnische Maßnahmen. Dadurch, dass die Pressenantriebsvorrichtungen 21 nicht mechanisch zwangsgekoppelt sind, kann über jede Pressenantriebsvorrichtung 21 eine andere Position des betreffenden Druckpunktes 56 in Hubrichtung H vorgegeben werden. Um Beschädigungen der Führung des Stößels 11 zu vermeiden, erlaubt die Führung dem Stößel 11 zusätzlich zu der Bewegung in Hubrichtung H wenigstens einen weiteren Bewegungsfreiheitsgrad, nämlich eine Schrägstellung bezüglich einer Ebene, die durch die Tiefenrichtung T und die Querrichtung Q aufgespannt wird. Die Schrägstellung ist beispielsgemäß eine Kippbewegung um eine Achse parallel zu der Tiefenrichtung T.

Sind bei einem abgewandelten Ausführungsbeispiel zusätzlich in Tiefenrichtung T mit Abstand zueinander angeordnete Druckpunkte 56 vorhanden, kann zusätzlich eine Kippbewegung um eine Achse zugelassen werden, die parallel zu der Querrichtung Q ausgerichtet ist. Bei dem hier veranschaulichen Ausführungsbeispiel ist der Stößel 11 an zwölf Stellen über jeweils eine Rolle 15 gegenüber einer pressengestellseitigen Anlagefläche 13 abgestützt (Fig. 8). Vier Anlageflächen 13 haben entweder einen Normalenvektor in Tiefenrichtung T und vier Anlageflächen haben einen Normalenvektor in Querrichtung Q. Die Rollen 15 sind in Hubrichtung in zwei voneinander beabstandeten Höhenlagen am Stößel 11 angeordnet. In der einen Höhenlage, beispielsgemäß der unteren Höhenlage, liegt an jeder der acht Anlageflächen 13 eine Rolle 15 an. In der anderen Höhenlage, beispielsgemäß der oberen Höhenlage, liegt nur an den vier Anlageflächen 13 jeweils eine Rolle 15 an, deren Normalenvektor in Tiefenrichtung T zeigt. Dadurch ist ein Kippen des Stößels 11 um eine Achse parallel zu der Tiefenrichtung T ermöglicht. Auf dieselbe Weise könnte alternativ ein Kippen um eine Achse parallel zu der Querrichtung Q realisiert werden, wenn in der anderen Höhenlage, beispielsgemäß der oberen Höhenlage, die Rollen 15 nur an den vier Anlageflächen 13 mit jeweils einer Rolle anliegen, deren Normalenvektor in Querrichtung Q zeigt. Werden die Rollen 15 nur in einer Höhenlage angeordnet ist ein Kippen des Stößels 11 um Achsen in zwei Raumrichtungen T, Q möglich.

Zur Bestimmung der vom Stößel 11 aufgebrachten Pressenkraft weist die Presse 10 nicht dargestellte Kraftsensoren auf. Die Kraftsensoren können an einer beliebigen Stelle im Antriebsstrang zwischen dem Antriebsmotor und dem Stößel 11 angeordnet sein. Beispielsweise kann an jedem Kniehebelgetriebe 51 ein Kraftsensor zur Bestimmung der Pressenkraft vorhanden sein. Das Sensorsignal des Kraftsensors wird der Steuerung der Presse 10 übermittelt und ausgewertet. Zur Vermeidung einer Überlast wird abhängig von der aktuellen Drehstellung und mithin abhängig von der aktuellen Position des Stößels 11 sowie abhängig vom Sensorsignal des Kraftsensors erkannt, ob eine Überlast und mithin eine Beschädigung der Presse 10, des Werkzeugs oder des Werkstücks droht. In diesem Fall kann der wenigstens eine Antriebsmotor 30 so bestromt oder in einen Generatorbetrieb umgeschaltet werden, dass eine Bremskraft entgegen der aktuellen Drehrichtung erzeugt und die Stößelbewegung angehalten wird. Auch eine solche Überlastfunktion kann durch regelungstechnische bzw. steuerungstechnische Maßnahmen ohne die Verwendung von hydraulischen Überlasteinrichtungen ausgeführt werden.

Weist eine Pressenantriebsvorrichtung 21 mehrere Antriebsmotoren 30 auf, so kann dadurch das Antriebsmoment und/oder der Nennkraftweg erhöht werden. Vorzugsweise werden die vorhandenen Antriebsmotoren 30 einer gemeinsamen Pressenantriebsvorrichtung 21 unabhängig voneinander, beispielsweise über separate Frequenzumrichter, durch eine Pressensteuerung angesteuert. Wird bei einer Umformaufgabe nicht das Drehmoment aller Antriebsmotoren 30 benötigt oder wird während der Stößelbewegung zumindest in einem Abschnitt des Bewegungsprofils nicht das Drehmoment aller Antriebsmotoren 30 benötigt, so können ein oder mehrere der Antriebsmotoren beispielsweise stromlos passiv oder im Generatorbetrieb betrieben werden. Es ist auch möglich, die Antriebsmotoren 30 so anzusteuern, dass insgesamt die Verluste aller Antriebsmotoren 30 minimiert werden. Die Ansteuerung der vorhandenen Antriebsmotoren 30 erfolgt dabei derart, dass das benötigte Drehmoment von den Antriebsmotoren 30 so bereitgestellt wird, dass sich ein möglichst hoher Gesamtwirkungsgrad ergibt. Um eine größere Variabilität zu haben, können auch Antriebsmotoren 30 mit unterschiedlichen Drehmoment-Strom-Kennlinien und/oder unterschiedlichen Wirkungsgradkennfeldern eingesetzt werden.

Im Generatorbetrieb kann beispielsweise Energie in Energiespeicher in einen elektrischen Zwischenkreis zurück gespeist werden. Diese Energie kann beim nächsten Arbeitshub verwendet werden. Die Netzbelastung lässt sich dadurch reduzieren.

Dadurch, dass der Antriebsmotor 30 getriebelos direkt mit der Antriebswelle 35 gekoppelt ist und durch die Verwendung der Wälzlager zur Lagerung des Pleuels 49 bzw. zur Lagerung der Kniehebel 52, 53 des Kniehebelgetriebes 51, erreicht die Presse 10 eine hohe Dynamik. Der Pressenstößel 11 kann mit hohen Beträgen beschleunigt bzw. verzögert werden. Die Presse 10 arbeitet außerdem sehr geräuscharm.

Abhängig von der Umformaufgabe kann der Pressenstößel 11 mit einem beliebigen Bewegungsprofil in Hubrichtung H bewegt werden. Beispielsweise kann der Pressenstößel 11 im unteren Totpunkt angehalten werden. Zur oszillierenden Bewegung des Pressenstößels 11 kann der wenigstens eine Antriebsmotor am oberen Totpunkt und am unteren Totpunkt der Stößelbewegung seine Drehrichtung umkehren und mithin in einem Drehwinkelbereich pendelnd angetrieben werden. Es ist auch möglich, den Drehwinkelbereich symmetrisch oder unsymmetrisch um den unteren Totpunkt zu wählen, so dass nach jeder Drehrichtungsumkehr des wenigstens einen Antriebsmotors 30 der untere Totpunkt der Stößelbewegung durchlaufen wird. Der wenigstens eine Antriebsmotor 30 kann außerdem ohne Drehrichtungsumkehr rotierend um die Wellenachse W angetrieben werden. Somit kann eine Stößelbewegung nach folgenden Prinzipien erfolgen:
- weggebunden, wie bei einer klassischen Schwungradpresse oder
- kraftgebunden, wie bei einer hydraulischen Presse oder
- energiegebunden, wie bei einer Schmiedepresse mit einer Spindel oder nach dem Hammerprinzip.

Wie bereits erläutert ist es möglich, mehr als zwei Antriebsgehäuse 24, 25 vorzusehen und in einem oder mehreren der Antriebsgehäuse jeweils einen Antriebsmotor 30 und/oder eine Bremseinrichtung 31 anzuordnen. In den Fig. 9 bis 11 sind stark schematisiert Konfigurationsbeispiele veranschaulicht. Es versteht sich, dass auch weitere Konfigurationen realisierbar sind.

Bei dem in Fig. 9 veranschaulichten Ausführungsbeispiel ist sowohl im ersten Antriebsgehäuse 24, als auch im zweiten Antriebsgehäuse 25 jeweils ein Antriebsmotor 30, als auch eine Bremseinheit 31 angeordnet. Der mit dem Antriebsgehäuse 24 bzw. 25 verbundene Teil der Bremseinrichtung 31 ist bei dieser Ausführung im Unterschied zu dem vorherstehend erläuterten Ausführungsbeispiel nicht mit der Innenwand, sondern mit dem Deckel 28 des Antriebsgehäuses verbunden.

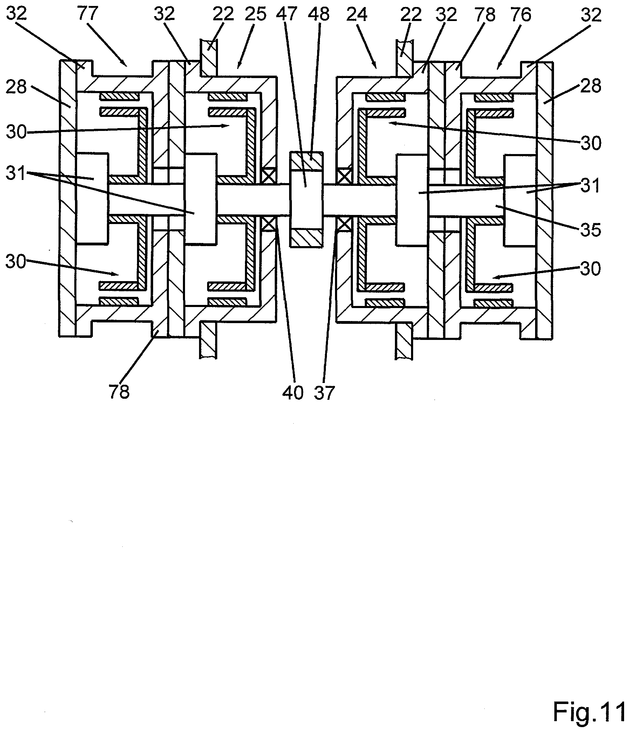

Bei den Ausführungsbeispielen gemäß der Fig. 10 und 11 ist jeweils mit dem ersten Antriebsgehäuse 24 ein drittes Antriebsgehäuse 76 und mit dem zweiten Antriebsgehäuse 25 ein viertes Antriebsgehäuse 77 verbunden. Das dritte und das vierte Antriebsgehäuse 76, 77 sind in Verlängerung der Wellenachse W und koaxial dazu angeordnet. Das dritte und das vierte Antriebsgehäuse 76, 77 sind im Prinzip genauso aufgebaut wie das erste Antriebsgehäuse 24 und das zweite Antriebsgehäuse 25. Wie in den Figuren 10 und 11 zu erkennen ist, wird die Antriebswelle 35 jedoch ausschließlich an der ersten Lagerstelle 36 über die erste Lagereinrichtung 37 und an der zweiten Lagerstelle 39 über die zweite Lagereinrichtung 40 gelagert. Die Antriebswelle 35 durchsetzt die Deckel 28 des ersten und des zweiten Antriebsgehäuses 24, 25 sowie die jeweilige Innenwand 27 des dritten und des vierten Antriebsgehäuses 76, 77.

Im Unterschied zu dem ersten und dem zweiten Antriebsgehäuse 24, 25 haben das dritte Antriebsgehäuse 76 und das vierte Antriebsgehäuse 77 auf der Axialseite mit der Innenwand 27 jeweils einen Verbindungsflansch 78. Über diesen Verbindungsflansch 78 kann eine Verbindung mit dem zugeordneten ersten Antriebsgehäuse 24 bzw. zweiten Antriebsgehäuse 25 hergestellt werden.

Auch im dritten Antriebsgehäuse 76 und im vierten Antriebsgehäuse 77 können jeweils ein Antriebsmotor 30 und/oder eine Bremseinrichtung 31 angeordnet werden. Zwei lediglich beispielhafte Konfigurationen sind in den Fig. 10 und 11 veranschaulicht. In Fig. 11 ist in jedem Antriebsgehäuse 24, 25, 76, 77 jeweils ein Antriebsmotor 30 sowie eine Bremseinrichtung 31 angeordnet. Demgegenüber sind beim Ausführungsbeispiel nach Fig. 10 lediglich zwei Bremseinrichtungen 31 vorhanden, die im dritten Antriebsgehäuse 76 und im vierten Antriebsgehäuse 77 vorgesehen sind.

Im Unterschied zu den Ausführungsbeispielen gemäß der Fig. 9 bis 11 sind bezüglich des Pleuellagers 46 auch unsymmetrische Anordnungen denkbar, beispielsweise derart, dass sich die Antriebsmotoren 30 auf der einen Axialseite des Pleuellagers 46 und die Bremseinrichtungen 31 auf der jeweils anderen Axialseite befinden, entsprechend dem Ausführungsbeispiel, wie es anhand der Fig. 1 bis 8 erläutert wurde. Die Anzahl der Antriebsgehäuse kann auch ungeradzahlig sein und im Prinzip in jeder beliebigen Anzahl größer oder gleich 2 vorgesehen sein.

Bei allen Ausführungsformen der Pressenantriebsvorrichtung 21 könnte anstelle des beispielsgemäß verwendeten Innenläufermotors prinzipiell auch ein Außenläufermotor verwendet werden, was aber für die kompakte Anordnung im Antriebsgehäuse weniger vorteilhaft ist.

Bei allen Ausführungsformen der Pressenantriebsvorrichtung 21 können der Rotor und/oder die Rotornabe und/oder andere drehfest mit der Antriebswelle 35 verbundenen Teile durch Vergrößerung ihrer Masse und/oder durch Anbringen von wenigstens einem Schwungmassenelement 80 als Schwungmasse dienen (Fig. 9). Der im Gehäuseinnenraum 29 verfügbare freie Bauraum kann ausgenutzt werden, um eine solche zusätzliche Schwungmasse bereitzustellen.

### Bezugszeichenliste:

- 10: Presse
- 11: Stößel
- 12: Pressengestell
- 13: Anlagefläche
- 14: Führungselement
- 15: Rolle

- 18: Fußteil
- 19: Pressentisch
- 20: Kopfteil
- 21: Pressenantriebsvorrichtung
- 22: Pressengestellplatte
- 23: Aufnahmeöffnung
- 24: erstes Antriebsgehäuse
- 25: zweites Antriebsgehäuse
- 26: Umfangswand
- 27: Innenwand
- 28: Deckel
- 29: Gehäuseinnenraum
- 30: Antriebsmotor
- 31: Bremseinrichtung
- 32: Befestigungsflansch
- 33: Gehäuseöffnung

- 35: Antriebswelle
- 36: erste Lagerstelle
- 37: erste Lagereinrichtung
- 38: Lageraussparung
- 39: zweite Lagerstelle
- 40: zweite Lagereinrichtung
- 41: erstes Lagerteil
- 42: zweites Lagerteil

- 46: Pleuellager
- 47: Exzenterteil
- 48: Antriebsende
- 49: Pleuel
- 50: Abtriebsende
- 51: Kniehebelgetriebe
- 52: erster Kniehebel
- 52a: Kniehebelelement des ersten Kniehebels
- 52b: Kniehebelelement des ersten Kniehebels
- 53: zweiter Kniehebel
- 53a: Kniehebelelement des zweiten Kniehebels
- 53b: Kniehebelelement des zweiten Kniehebels
- 54: Gelenkverbindung
- 54a: Gelenkpunkt
- 54b: Gelenkpunkt
- 55: Kniegelenk
- 56: Druckpunkt
- 57: Kniegelenkzapfen
- 58: erster Lagerzapfen
- 59: zweiter Lagerzapfen
- 60: Wange

- 65: Stator
- 66: Rotor
- 67: Rotornabe
- 68: Scheibe
- 69: Hohlwelle
- 70: Halteteil
- 71: Aufnahmeraum
- 72: Sensor

- 76: drittes Antriebsgehäuse
- 77: viertes Antriebsgehäuse
- 78: Verbindungsflansch

- 80: Schwungmassenelement

- H: Hubrichtung
- Q: Querrichtung
- T: Tiefenrichtung
- W: Wellenachse

## Patentansprüche

1. Pressenantriebsvorrichtung (21) für eine Presse (10), mit einem Pleuel (49), das ein Antriebsende (48) und ein Abtriebsende (50) aufweist,
mit einer Antriebswelle (35), die um eine Wellenachse (W) drehbar ist und ein gegenüber der Wellenachse (W) exzentrisch angeordnetes Pleuellager (46) aufweist, an dem das Antriebsende (48) des Pleuels (49) gelagert ist,
mit wenigstens einem elektrischen Antriebsmotor (30) aufweisend einen Stator (65) und einen Rotor (66), mit einer den Rotor (66) tragenden Rotornabe (67), die drehfest mit der Antriebswelle (35) verbunden ist, mit einer an einer ersten Lagerstelle (36) vorhandenen ersten Lagereinrichtung (37), die die Antriebswelle (35) an einem ersten Lagerteil (41) lagert und mit einer an einer zweiten Lagerstelle (39) vorhandenen zweiten Lagereinrichtung (40), die die Antriebswelle (35) an einem zweiten Lagerteil (42) lagert, wobei die beiden Lagerstellen (36, 39) auf axial verschiedenen Seiten des Pleuellagers (46) angeordnet sind,
wobei der Rotor (66) und die Rotornabe (67) des wenigstens einen Antriebsmotors (30) ausschließlich über die erste Lagereinrichtung (37) an der ersten Lagerstelle (36) und/oder die zweite Lagereinrichtung (40) an der zweiten Lagerstelle (39) gelagert sind,
**dadurch gekennzeichnet, dass** wenigstens ein erstes Antriebsgehäuse (24) und ein zweites Antriebsgehäuse (25) vorhanden sind, wobei jedes Antriebsgehäuse (24, 25) eine sich ringförmig geschlossen in Umfangsrichtung um die Wellenachse (W) und/oder koaxial zu der Wellenachse (W) erstreckende Umfangswand (26) und eine mit der Umfangswand (26) verbundene Innenwand (27) aufweist, wobei die Innenwand (27) an der dem Pleuellager (46) zugewandten Innenseite angeordnet ist,
und dass das erste Lagerteil (41) mit der ersten Lagerstelle (36) Bestandteil des ersten Antriebsgehäuses (24) ist und/oder dass das zweite Lagerteil (42) mit der zweiten Lagerstelle (39) Bestandteil des zweiten Antriebsgehäuses (25) ist.

2. Pressenantriebsvorrichtung nach Anspruch 1,
**dadurch gekennzeichnet, dass** die erste Lagereinrichtung (37) und/oder die zweite Lagereinrichtung (40) als Wälzlager ausgeführt ist.

3. Pressenantriebsvorrichtung nach Anspruch 1 oder 2,
**dadurch gekennzeichnet, dass** die erste Lagereinrichtung (37) ein Festlager bildet und die zweite Lagereinrichtung (40) ein Loslager bildet.

4. Pressenantriebsvorrichtung nach einem der vorhergehenden Ansprüche,
**dadurch gekennzeichnet, dass** der wenigstens eine Rotor (66) getriebelos direkt mit der Antriebswelle (35) verbunden ist.

5. Pressenantriebsvorrichtung nach einem der vorhergehenden Ansprüche,
**dadurch gekennzeichnet, dass** das erste Antriebsgehäuse (24) und das zweite Antriebsgehäuse (25) jeweils einen Befestigungsflansch (32) zur Befestigung an einem Pressengestell (12) aufweisen, der an dem der Innenwand (27) entgegengesetzten axialen Ende der Umfangswand (26) angeordnet ist.

6. Pressenantriebsvorrichtung nach einem der vorhergehenden Ansprüche,
**dadurch gekennzeichnet, dass** zumindest ein weiteres Antriebsgehäuse (76, 77) vorhanden ist, das eine sich ringförmig geschlossen in Umfangsrichtung um die Wellenachse (W) und/oder koaxial zu der Wellenachse (W) erstreckende Umfangswand (26) und an einer dem ersten oder zweiten Antriebsgehäuse (24, 25) zugewandten Axialseite einen Verbindungsflansch (78) aufweist.

7. Pressenantriebsvorrichtung nach einem der vorhergehenden Ansprüche,
**dadurch gekennzeichnet, dass** in einem oder mehreren der vorhandenen Antriebsgehäuse (24, 25, 76, 77) jeweils ein Antriebsmotor (30) angeordnet ist.

8. Pressenantriebsvorrichtung nach einem der vorhergehenden Ansprüche,
**dadurch gekennzeichnet, dass** wenigstens eine Bremseinrichtung (31) vorhanden ist.

9. Pressenantriebsvorrichtung nach Anspruch 8,
**dadurch gekennzeichnet, dass** in einem oder mehreren der vorhandenen Antriebsgehäuse (24, 25, 76, 77) jeweils eine Bremseinrichtung (31) angeordnet ist.

10. Pressenantriebsvorrichtung nach einem der vorhergehenden Ansprüche,
**dadurch gekennzeichnet, dass** der Rotor (66) eine hohlzylindrische Gestalt aufweist und an einem axialen Ende an der Rotornabe (67) befestigt ist.

11. Pressenantriebsvorrichtung nach Anspruch 9 und 10,
**dadurch gekennzeichnet, dass** in wenigstens einem der vorhandenen Antriebsgehäuse (24, 25, 76, 77) sowohl ein Antriebsmotor (30) als auch eine Bremseinrichtung (31) angeordnet ist und die Bremseinrichtung axial neben der Rotornabe (67) angeordnet ist und zumindest teilweise in den Raum zwischen dem Rotor und der Wellenachse (W) eingreift.

12. Pressenantriebsvorrichtung nach einem der vorhergehenden Ansprüche,
**dadurch gekennzeichnet, dass** die Rotornabe (67) eine sich radial zur Wellenachse (W) erstreckende Scheibe (68) ist oder sich radial zur Wellenachse (W) erstreckende Speichen aufweist, an denen der Rotor (66) befestigt ist.

13. Pressenantriebsvorrichtung nach einem der vorhergehenden Ansprüche,
**dadurch gekennzeichnet, dass** die Rotornabe (67) eine Hohlwelle (69) aufweist, die die Antriebswelle (35) umschließt und drehfest mit der Antriebswelle (35) verbunden ist.

14. Presse (10)
mit einem Pressengestell (12), an dem ein Stößel (11) in einer Hubrichtung (H) bewegbar geführt gelagert ist,
mit wenigstens einem Kniehebelgetriebe (51), das einen ersten Kniehebel (52) und einen zweiten Kniehebel (53) aufweist, die durch eine Gelenkverbindung (54) miteinander verbunden sind, wobei der erste Kniehebel (52) gelenkig mit dem Pressengestell (12) und der zweite Kniehebel (53) an einem Druckpunkt (56) gelenkig mit dem Stößel (11) verbunden ist,
und mit wenigstens einer Pressenantriebsvorrichtung (21) nach einem der vorhergehenden Ansprüche, wobei das Abtriebsende (50) des Pleuels (49) mit der Gelenkverbindung (54) verbunden ist.

15. Presse nach Anspruch 14,
**dadurch gekennzeichnet, dass** zwei Pressenantriebsvorrichtungen (21) vorhanden sind, die mit Stößel (11) über jeweils ein Kniehebelgetriebe (51) bewegungsgekoppelt sind.

16. Presse nach Anspruch 14,
**dadurch gekennzeichnet, dass** das erste und/oder zweite Antriebsgehäuse (24, 25) jedes Pressenantriebs (21) einen Gehäuseinnenraum (29) bereitstellt, in dem ein Antriebsmotor (20) und/oder eine Bremseinrichtung (31) angeordnet ist, wobei der Gehäuseinnenraum (29) innerhalb der Außenkontur des Pressengestells (12) angeordnet ist.

## Claims

1. Press drive device (21) for a press (10)
having a connecting rod (49) that has an driving end (48) and an driven end (50),
having a drive shaft (35) that can be rotated about a shaft axis (W) and that comprises a connecting rod bearing (46), which is eccentrically arranged relative to the shaft axis (W) and on which the driving end (48) of the connecting rod (49) is supported,
having at least one electric driving motor (30) comprising a and a rotor (66),
having a rotor hub (67), which supports the rotor (66) and which is connected to the drive shaft (35) in a torque-proof manner,
having a first bearing mechanism (37), which is provided at a first bearing site (36) and which supports the drive shaft (35) on a first bearing part (41), and having a second bearing mechanism (40), which is provided at a second bearing site (39) and which supports the drive shaft (35) on a second bearing part (42), wherein the two bearing sites (36, 39) are arranged on axially different sides of the connecting rod bearing (46),
wherein the rotor (66) and the rotor hub (67) of the at least one driving motor (30) are supported only via the first bearing mechanism (37) at the first bearing site (36) and/or the second bearing mechanism (40) at the second bearing site (39),
**characterized in that** at least a first drive housing (24) and a second drive housing (25) are provided, wherein each drive housing (24, 25) has a circumferential wall (26) extending in circumferential direction around the shaft axis (W) in a ring shaped closed manner and/or coaxially with respect to the shaft axis (W), and has an interior wall (27) connected to the circumferential wall (26), wherein the interior wall (27) is arranged on the interior side facing the connecting rod bearing (46),
and **in that** the first bearing part (41) with the first bearing site (36) is a component of the first drive housing (24) and/or that the second bearing part (42) with the second bearing site (39) is a component of the second drive housing (25).

2. Press drive device according to claim 1,
**characterized in that** the first bearing mechanism (37) and/or the second bearing mechanism (40) is configured as roller bearing.

3. Press drive device according to claim 1 or 2,
**characterized in that** the first bearing mechanism (37) forms a fixed bearing and the second bearing mechanism (40) forms a movable bearing.

4. Press drive device according to one of the preceding claims,
**characterized in that** the at least one rotor (66) is in a gearless manner directly connected to the drive shaft (35).

5. Press drive device according to one of the preceding claims,
**characterized in that** the first drive housing (24) and the second drive housing (25) each have a mounting flange (32) for mounting to a press frame (12) that is arranged on the axial end of the circumferential wall (26) opposite the interior wall (27).

6. Press drive device according to one of the preceding claims,
**characterized in that** at least one further drive housing (76, 77) is provided having a circumferential wall (26) extending in circumferential direction around the shaft axis (W) in a ring shaped closed manner and/or coaxially with respect to the shaft axis (W), and having a connecting flange (78) on an axial side facing the first or second drive housing (24, 25).

7. Press drive device according to one of the preceding claims,
**characterized in that** respectively one driving motor (30) is provided in one or more of the existing drive housings (24, 25, 76, 77).

8. Press drive device according to one of the preceding claims,
**characterized in that** at least one brake unit (31) is provided.

9. Press drive device according to claim 8,
**characterized in that** in one or more of the provided drive housings (24, 25, 76, 77) one brake unit (31) is arranged.

10. Press drive according to one of the preceding claims,
**characterized in that** the rotor (66) has a hollow cylindrical shape and is mounted to the rotor hub (67) on one axial end.

11. Press drive device according to claims 9 and 10,
**characterized in that**, in at least one of the provided drive housings (24, 25, 76, 77) a driving motor (30) as well as a brake unit (31) are arranged, and that the brake unit is arranged axially adjacent to the rotor hub (67) and engages at least partially in the space between the rotor and the shaft axis (W).

12. Press drive device according to one of the preceding claims,
**characterized in that** the rotor hub (67) is a disk (68) extending radially with respect to the shaft axis (W) or comprises spokes extending radially with respect to the shaft axis (W) to which the rotor (66) is mounted.

13. Press drive device according to one of the preceding claims,
**characterized in that** the rotor hub (67) has a hollow shaft (69) that encloses the drive shaft (35) and is connected to the drive shaft (35) in a torque-proof manner.

14. Press (10)
having a press frame (12) which supports a slide (11) in a manner so as to be movably guided in a stroke direction (H),
having at least one toggle lever linkage (51) that comprises a first toggle lever (52) and a second toggle lever (53), said levers being connected to each other by means of a link joint (54), wherein the first toggle lever (52) is hinged to the press frame (12) and the second toggle lever (53) is hinged to a pressure point (56),
and having at least one press drive device (21) according to one of the preceding claims, wherein the driven end (50) of the connecting rod (49) is connected to the link joint (54).

15. Press according to claim 14,
**characterized in that** there are provided two press drive devices (21), each being movably coupled to the slide (11) via respectively one toggle lever linkage (51).

16. Press according to claim 14,
**characterized in that** the first and/or the second drive housing (24, 25) of each press drive (21) provides a housing interior (29) in which a driving motor (20) and/or a brake unit (31) is arranged, wherein the housing interior (29) is arranged inside the outer contour of the press frame (12).

## Revendications

1. Dispositif d'entraînement de presse (21) destiné à une presse (10),
comprenant une bielle (49) qui présente une extrémité menante (48) et une extrémité menée (50),
comprenant un arbre d'entraînement (35) qui peut être mis en rotation autour d'un axe d'arbre (W) et présente un coussinet de bielle (46) qui est disposé de façon excentrée par rapport à l'axe de l'arbre (W) et sur lequel est monté l'extrémité menante (48) de la bielle (49),
comprenant au moins un moteur d'entraînement (30) électrique présentant un stator (65) et un rotor (66),
comprenant un moyeu de rotor (67) qui porte le rotor (66) et est relié de façon solidaire en rotation à l'arbre d'entraînement (35),
comprenant un premier dispositif de palier (37) qui est prévu en un premier point d'appui (36) et supporte l'arbre d'entraînement (35) sur un premier élément d'appui (41), et comprenant un deuxième dispositif de palier (40) qui est prévu en un deuxième point d'appui (39) et supporte l'arbre d'entraînement (35) sur un deuxième élément d'appui (42), les deux points d'appui (36, 39) étant placés sur des côtés axialement différents du coussinet de bielle (46),
dans lequel le rotor (66) et le moyeu de rotor (67) du moteur d'entraînement (30), au nombre d'au moins un, sont montés exclusivement par l'intermédiaire du premier dispositif de palier (37) sur le premier point d'appui (36) et/ou par l'intermédiaire du deuxième dispositif de palier (40) sur le deuxième point d'appui (39),
**caractérisé en ce que**
au moins un premier carter d'entraînement (24) et un deuxième carter d'entraînement (25) sont prévus, chaque carter d'entraînement (24, 25) présentant une paroi périphérique (26), qui s'étend sous une forme annulaire fermée dans la direction périphérique autour de l'axe de l'arbre (W) et/ou coaxialement avec l'axe de l'arbre (W), et une paroi intérieure (27) reliée à la paroi périphérique (26), la paroi intérieure (27) étant disposée sur la face intérieure associée au coussinet de bielle (46),
et **en ce que** le premier élément d'appui (41), avec le premier point d'appui (36), fait partie du premier carter d'entraînement (24) et/ou **en ce que** le deuxième élément d'appui (42), avec le deuxième point d'appui (39), fait partie du deuxième carter d'entraînement (25).

2. Dispositif d'entraînement de presse selon la revendication 1, **caractérisé en ce que** le premier dispositif de palier (37) et/ou le deuxième dispositif de palier (40) est/sont réalisé(s) sous forme de palier(s) à roulement.

3. Dispositif d'entraînement de presse selon la revendication 1 ou 2, **caractérisé en ce que** le premier dispositif de palier (37) constitue un palier fixe, et le deuxième dispositif de palier (40) constitue un palier libre.

4. Dispositif d'entraînement de presse selon l'une des revendications précédentes, **caractérisé en ce que** le rotor (66), au nombre d'au moins un, est relié directement, sans mécanisme de transmission, à l'arbre d'entraînement (35).

5. Dispositif d'entraînement de presse selon l'une des revendications précédentes, **caractérisé en ce que** le premier carter d'entraînement (24) et le deuxième carter d'entraînement (25) présentent chacun une bride de fixation (32) qui est destinée au montage sur un bâti de presse (12) et est disposée sur l'extrémité axiale de la paroi périphérique (26) opposée à la paroi intérieure (27).

6. Dispositif d'entraînement de presse selon l'une des revendications précédentes, **caractérisé en ce qu'**il est prévu au moins un carter d'entraînement (76, 77) supplémentaire, présentant une paroi périphérique (26), qui s'étend sous une forme annulaire fermée dans la direction périphérique autour de l'axe de l'arbre (W) et/ou coaxialement avec l'axe de l'arbre (W), et un flasque d'assemblage (78) prévu sur un côté axial tourné vers le premier ou le deuxième carter d'entraînement (24, 25).

7. Dispositif d'entraînement de presse selon l'une des revendications précédentes, **caractérisé en ce que** dans un ou plusieurs des carters d'entraînement (24, 25, 76, 77) présents, il est respectivement prévu un moteur d'entraînement (30).

8. Dispositif d'entraînement de presse selon l'une des revendications précédentes, **caractérisé en ce qu'**il est prévu au moins un dispositif de freinage (31).

9. Dispositif d'entraînement de presse selon la revendication 8, **caractérisé en ce que** dans un ou plusieurs des carters d'entraînement (24, 25, 76, 77) présents, il est respectivement prévu un dispositif de freinage (31).

10. Dispositif d'entraînement de presse selon l'une des revendications précédentes, **caractérisé en ce que** le rotor (66) présente une forme cylindrique creuse et est fixé par une extrémité axiale au moyeu de rotor (67.

11. Dispositif d'entraînement de presse selon les revendications 9 et 10, **caractérisé en ce que** dans au moins un des carters d' entraînement (24, 25, 76, 77) présents, il est prévu aussi bien un moteur d'entraînement (30) qu'un dispositif de freinage (31), et que le dispositif de freinage est placé axialement à côté du moyeu de rotor (67) et s'engage au moins en partie dans l'espace entre le rotor et l'axe de l'arbre (W).

12. Dispositif d'entraînement de presse selon l'une des revendications précédentes, **caractérisé en ce que** le moyeu de rotor (67) est un disque (68) s'étendant radialement par rapport à l'axe de l'arbre (W) ou présente des rayons qui s'étendent radialement par rapport à l'axe de l'arbre (W) et auxquels est fixé le rotor (66).

13. Dispositif d'entraînement de presse selon l'une des revendications précédentes, **caractérisé en ce que** le moyeu de rotor (67) présente un arbre creux (69) qui entoure l'arbre d'entraînement (35) et est relié de façon solidaire en rotation à l'arbre d'entraînement (35).

14. Presse (10),
comprenant un bâti de presse (12) sur lequel un coulisseau (11) est monté avec possibilité de déplacement dans une direction de course (H),
comprenant au moins un mécanisme à genouillères (51) qui présente un premier levier à genouillère (52) et un deuxième levier à genouillère (53), qui sont reliés entre eux par une jonction articulée (54), le premier levier à genouillère (52) étant relié de manière articulée au bâti de presse (12), et le deuxième levier à genouillère étant relié de manière articulée au coulisseau (11), en un point de pression (56),
et comprenant au moins un dispositif d'entraînement de presse (21) selon l'une des revendications précédentes, l'extrémité menée (50) de la bielle (49) étant reliée à la jonction articulée (54).

15. Presse selon la revendication 14, **caractérisée en ce qu'**il est prévu deux dispositifs d'entraînement de presse (21) qui sont couplés du point de vue du mouvement au coulisseau (11), respectivement par l'intermédiaire d'un mécanisme à genouillères (51).

16. Presse selon la revendication 14, **caractérisée en ce que** le premier et/ou le deuxième carter d'entraînement (24, 25) de chaque dispositif d'entraînement de presse (21) fournit une cavité de carter (29) dans laquelle est installé un moteur d'entraînement (20) et/ou un dispositif de freinage (31), la cavité de carter (29) étant disposée à l'intérieur du contour extérieur du bâti de presse (12).
